# EUROPEAN PATENT APPLICATION

(11) **EP 1 016 486 A1**
(43) Date of publication of application: **05.07.2000**
(21) Application number: 98124808.1
(22) Date of filing: 29.12.1998
(51) Int. Cl.: B23K 9/133

(54) **Wire pulling unit for a continuous wire welding apparatus**

(71) Applicant: Montini, Renato, 37010 Costermano (Verona) (IT)
(72) Inventor: Montini, Renato, 37010 Costermano (Verona) (IT)
(74) Representative: Modiano, Guido, Dr.-Ing.

(57) **Abstract**

A wire pulling unit, particularly for continuous wire welding apparatuses, which includes a support casing, a pair of driving feed rollers arranged one after the other in the direction in which the wire to be pulled is unwound, and a pair of back-up or pressure rollers which are resiliently loaded against the feed rollers. The pair of pressure rollers are mounted on a rocker arm element which is pivoted to a support at an intermediate position thereof between the pressure rollers, whereby, in use, should one pressure roller be lifted away from its respective feed roller the other roller is pressed against its respective driving feed roller to ensure constant grip on the wire being pulled.

## Description

The present invention relates to a wire pulling unit for a continuous wire welding apparatus.

As it is known, a wire pulling unit must be able to uninterruptedly feed welding wire to a torch.

In any application of this type it is important to adopt systems which allow the working processes used to be very rapid and safe.

In a conventional wire pulling unit with two feed rollers and two back-up rollers, a typical malfunction is due to the presence of defects (such as bends, knots, etcetera) in the wire to be pulled, which causes the back-up rollers to be lifted, the wire pulling unit to lose its grip on the wire, and, occasionally, even the wire to be jammed or slowed down, with consequent delay in reaching the torch. Owing to this delay, the spark triggered for welding the wire, when it should be in the torch, welds the wire to the torch. Sometimes the wire is welded to the rollers of the wire pulling unit since the rollers are electrically in contact with the workpiece to be welded.

Another limitation is due to the fact that in case of wire jamming it is necessary to disassemble and replace some components of the torch, which causes a consequent prolonged inactivity of the welding apparatus and of all the subsequent processing operations linked to it.

The aim of the present invention is to provide a wire pulling unit arranged to eliminate or significantly reduce the above-mentioned drawbacks.

Within the scope of this aim, an object of the present invention is to provide a wire pulling unit which is fully protected to prevent injury to the operator, can be easily and quickly assembled to provide general economy in production costs and is compact in structure so as to be of universal use also in small welding apparatuses.

Another object of the present invention is to provide a wire pulling unit which is safe in operation and does not require frequent maintenance operations.

This aim, these objects and others which will become better apparent hereinafter are achieved by a wire pulling unit, particularly for continuous wire welding apparatuses, which includes a support casing, a pair of driving feed rollers arranged one after the other in the direction in which the wire to be pulled is unwound, and a pair of back-up or pressure rollers which are resiliently loaded against the feed rollers, said pair of pressure rollers being mounted on a rocker arm element which is pivoted to a support at an intermediate position thereof between the pressure rollers, whereby, in use, should one pressure roller be lifted away from its respective feed roller, the other roller is pressed against its respective driving feed roller to ensure constant grip on the wire being pulled.

Advantageously, said support for the rocker arm element comprises a lever having one end thereof pivoted to said casing and its other end resiliently loaded against the feed rollers, and being rigidly coupled at an intermediate position thereof to said rocker arm element.

Further aspects and advantages of the present invention will become better apparent from the following detailed description of a currently preferred embodiment thereof, illustrated only by way of non-limitative example in the accompanying drawings, wherein:

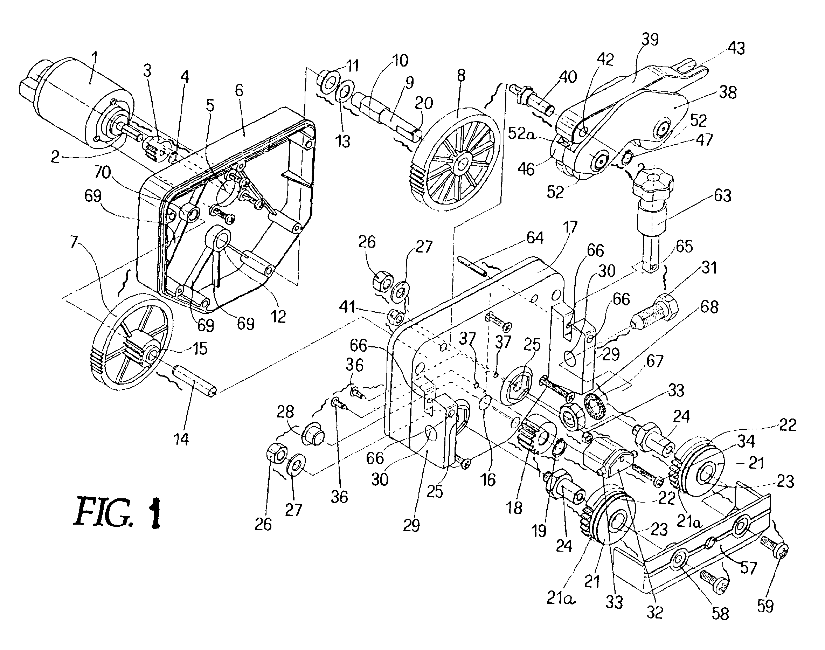

Figure 1 is an exploded elevation perspective view slightly from above of a wire pulling unit equipped with a gearmotor, according to the present invention;
Figure 2 is a perspective view of the wire pulling unit of Figure 1 in its assembled condition;
Figure 3 is a front elevation view with parts shown in cross-section of the wire pulling unit of Figure 2;
Figure 4 is a plan view with parts shown in cross-section of the wire pulling unit of Figure 1;
Figure 5 is an exploded perspective view of an assembly comprising the back-up rollers, the rocker arm element and the lever support;
Figure 6 is a front elevation view with parts shown in cross-section of the assembly of Figure 5; and
Figure 7 is a plan view of Figure 6, with a pressure roller shown in a partial cross-section.

In the accompanying drawings, identical or similar parts or components have been designated by the same reference numerals.

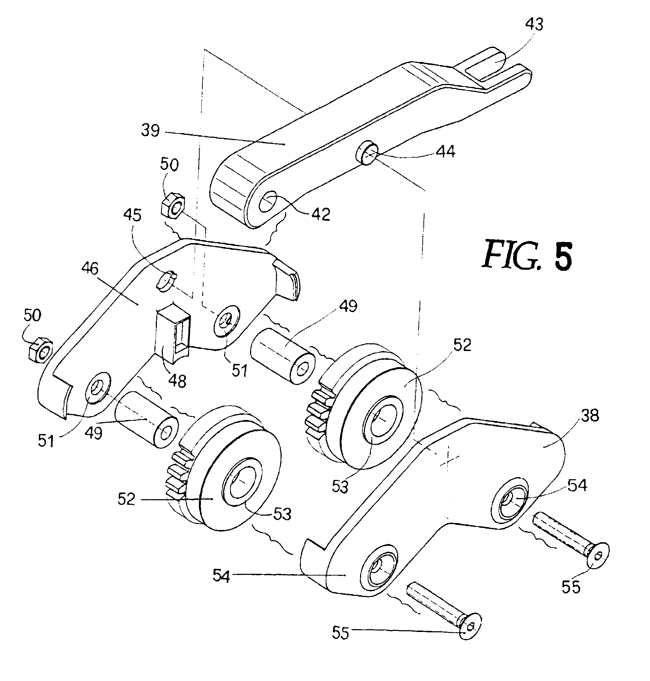

With reference to the above-listed figures, it will be noted that a wire pulling unit, particularly suitable for continuous wire welding apparatuses, comprises an electric motor 1, a rear cover 6 and a front cover 17, which constitute a casing delimiting a space therein for a rotary motion reduction system. Such a reduction system comprises a pair of driving feed rollers 21 arranged one after the other, in the direction in which the wire to be pulled is unwound, and a pair of back-up rollers 52, which are better shown in the exploded view of Figure 5. The back-up rollers 52 are resiliently loaded against the feed rollers 21 owing to the action of a rocker arm element having a front portion 38 and a rear portion 46 which is pivoted at an intermediate position thereof between the pressure rollers 52.

The electric motor 1 constitutes a source of motion for the entire wire pulling unit and has an output shaft 2 on which a pinion or primary gear 3 is keyed or removably fixed. A spring-lock ring 4 can be inserted in a suitable seat formed in the shaft 2 to prevent axial movements of the primary gear 3.

The shaft 1 and the primary gear 3 are inserted into the casing through a hole 5 formed in the rear cover 6. The primary gear 23 is operatively connected to a first reduction gear system 7 which reduces the speed of rotation by receiving the rotary motion on its larger diameter portion and transmitting it through its smaller diameter portion. In the illustrated embodiment, the first reduction gear system 7 has a compact shape, since its larger-diameter toothed portion and its smaller-diameter toothed portion are directly secured to each other by means of spokes. This solution provides lighter weight in addition to optimum compactness.

The first reduction gear system 7 can be supported by a pivot 14. If desired, the gear system 7 revolves directly on the pivot 14, or a self-lubricating bushing 15 can be provided to reduce friction. The pivot 14 is kept in its position by a cup-shaped seat 70 which is rigid with the rear cover 6 and is arranged on the inner face thereof.

The smaller-diameter toothed portion of the first reduction gear system 7 meshes with a driving gear 8 which has a larger diameter, so as to obtain a further reduction in the number of revolutions. Said driving gear is fitted on an output shaft 9, at one end of which a bush-shaped bearing 11 is mounted, which, in turn, can be inserted into a cup-shaped seat 12 which is rigid with the rear cover 6 and arranged on its inner face thereof. Near the rear cover stiffening ridges 69 are provided which are designed to uniformly distribute stresses.

The output shaft 9 has an expansion 10 with mutually opposite flat faces so as to lock the gear 8, that can be fitted on said expansion 10 and thus transmit the torque of the motor. An annular bearing 13 can be fitted on the shaft between the bush-shaped bearing 11 and the expansion 10 to reduce friction. A bush-shaped bearing 11 is mounted at one end of the shaft and can, in turn, be inserted in a cup-shaped seat 12 which is rigid with the rear cover 6 and arranged on its inner face. Near the seat 12 and elsewhere there are reinforcement ridges 69 designed to uniformly distribute stresses.

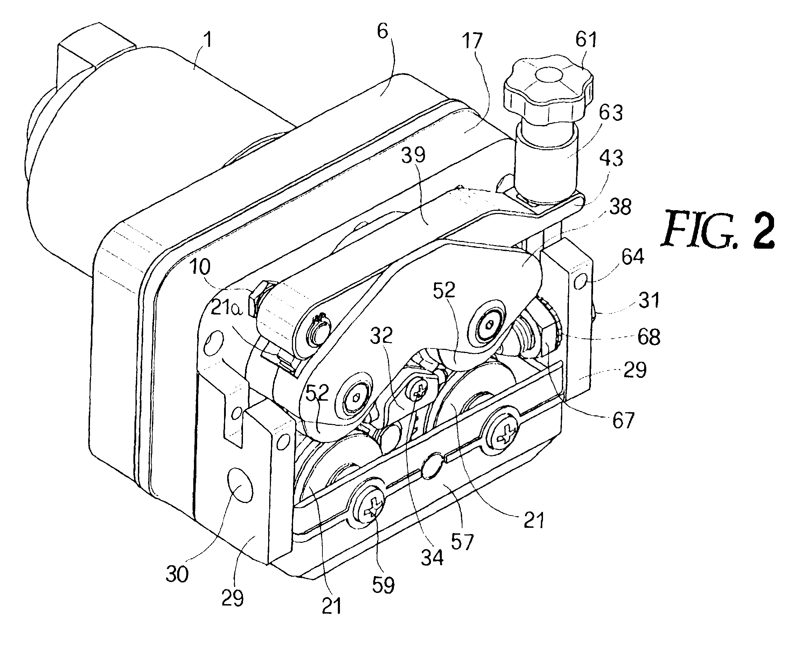

The output shaft 9 has its other end, opposite to that one engaged by the bearing 11, inserted in a bush-shaped bearing 28 and outside the casing since it extends through a hole 16 in the front cover 17. A driving pinion 18 is fixed to said end and kept axially secured by a spring-lock ring 19 which can be inserted in a suitable cavity 20 formed in the output shaft 9. As shown more clearly in Figure 2, the driving pinion 18 is operatively connected to both toothed teed rollers 21 and transmits the rotary motion to both of them to cause them to rotate in the same direction thereby pulling the wire to be welded, not shown in the drawings.

Advantageously, the axial dimensions of the pinion 18 are at least twice those required for motion transmission, thereby allowing to prolong its useful life. When its degree of wear is such as to require replacement, the pinion is turned around so as to use its still-intact part for meshing engagement.

The feed rollers 21 have, on their outer surface, a groove 22 having a cross-section such as to accommodate a respective length of the wire used for welding during a given working process. The feed rollers 21 are mounted by means of two self-lubricating half-bushings 23 which considerably reduce wear caused by friction on the threaded pivots 24 without the need of using a lubricant. In the illustrated embodiment, the pivot pins 24 have an externally threaded end which can be inserted in the front cover 17 through holes 25 and are locked in position at right angles with respect to the outer surface of said cover by threaded nuts 26 screwable onto the threaded end of the pivot pins 24 which protrude from the inner surface of the front cover 17. Washers 27 are arranged between the nuts 26 and the inner surface of said cover so as to prevent any disengagement.

The pivot pins 24 can have expansions which have a polygonal shape, for example a hexagonal shape, which corresponds to an identical hollow shape provided around the hole 25 to prevent said pivot pins from oscillating. On the opposite side with respect to the externally threaded end, the pivot pins 24 may have an internal thread which can engage with screws 59 designed to support a front closure housing 57, by being inserted into bores 58.

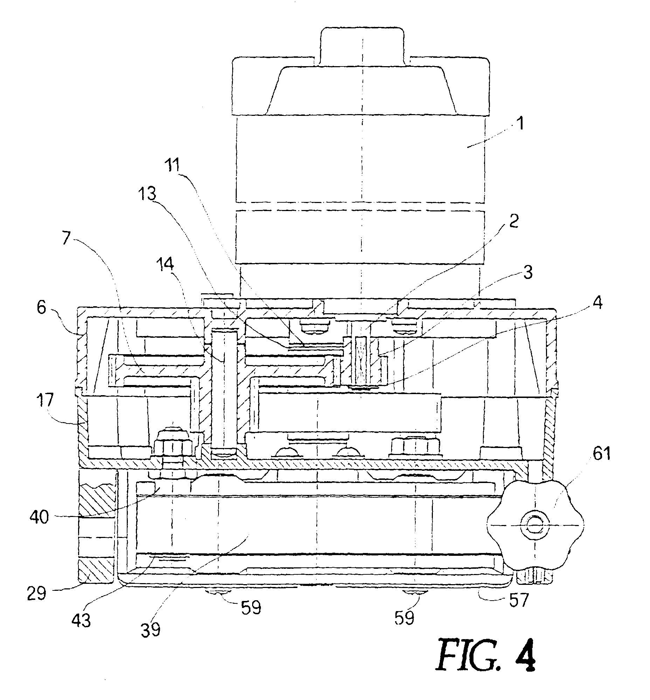

More particularly, with reference to Figure 4, the back-up rollers 52 rest against the teed rollers, from which they derive their motion by means of respective gears 21a and 52a. The back-up rollers 52 are mounted on a rocker arm element which is constituted by two portions 38 and 46, at least one of which has a connecting means to a leverlike support 39. The lever-like support has a pivot pin 44 which is formed on a lateral face thereof and at a central position with respect to its longitudinal extension. The pivot pin 44 can be inserted in a corresponding cavity 45 provided in the rocker arm element. In this manner, the lever-like support 39 and the rocker arm element can perform mutual oscillations.

The lever-like support 39 has, at one end thereof, a connecting means to the casing. In the embodiment shown in the drawings, such a connecting means comprises a hole 42 in which a pivot pin 40 which has an externally threaded end arranged to be inserted in an opening formed in the front cover 17 is loosely engaged. Said threaded end protrudes from the cover surface to be screwed into a self-locking nut 41 which fixes the pivot pin 40 to the casing. In this manner, the lever-like support 39 can angularly oscillate about the axis of the pivot pin 40.

The pivot pin, at its end opposite to its externally threaded end, has a recess inside which a spring-lock ring 47 is fixed, which is designed to restrain any movement of the lever-like support 39. The latter, at its end opposite to its end connected to the casing, has a fork 43 in which a tie rod 60 is engaged which is connected to the casing at one end thereof and has a control knob 61 at its other end.

Two forks 29 are secured, and extend at right angles, to the outer surface of the front cover 17 in lateral and mutually opposite positions and are formed, at their upper part, with holes 66 arranged to receive a spring pin 64 engaging with a hole 65 formed near the lower end of the tie rod 60, which can thus oscillate about the axis of the pin 64.

Each fork 29 has an opening 30 inside which it is possible to insert a threaded and perforated screw 31 designed to guide the wire pulled by the rollers. The screw 31 is fixed to the fork 29 by means of an internally threaded nut 67 and a toothed washer 68 arranged between the nut and the fork. The wire, not shown in the drawings, then passes through a central guiding tube 33 which is supported in a recess formed in a central wire guiding block 32. Clamping of the block 32 on the tube 33 is ensured by a screw 34, which is engaged in a hole extending transversely to the recess accommodating the tube 33, and by a threaded nut 35 which is screwed onto said screw 34. Two self-tapping screws 36 are inserted from inside the front cover 17 and protrude through respective holes 37 outside the cover, thereby fixing the central guiding block 32 to the casing.

A wire pressure cup 63 can be fitted on the tie rod 60 so that its base rests on the fork 43 and internally accommodates a helical spring 62 pre-loaded by the knob 61, which has an internal thread screwed onto an external thread formed on the end of the tie rod 60 opposite to the hole 65. By screwing the knob 61 onto the tie rod 60, the spring 62 is pre-loaded to keep the wire pressure cup 63 loaded against the fork 43 of the lever-like support 39.

Since the cavity 45 is provided in an intermediate position between the pressure rollers 52, if one of said presser rollers is lifted due to the presence of defects on the welding wire, the other pressure roller is pressed onto the corresponding driving feed roller owing to a first oscillation performed by the rocker arm 38 about the pivot pin 44 and a second oscillation of the lever-like element 39 about the pivot pin 40. This second oscillation is opposed by the action of the wire pressure cup 63 depending upon the pre-loading of the spring 62. In this manner it is possible to adjust the sensitivity and speed of intervention against the jamming and consequent stopping of the welding wire between the feed rollers 21 and the pressure rollers 52.

In case of malfunction, it is possible to have easy access to the region between the two pairs of rollers, since the tie rod 60 is quickly brought to the lowered position, whereby releasing the fork 43 and thus freeing the lever-like support 39, which is raised by being rotated about the pivot pin 40. Since the rocker arm 38 and the pressure rollers 52 are connected to the tie rod, access is ensured for easily disengaging the welding wire jammed between the rollers or for replacing the wire.

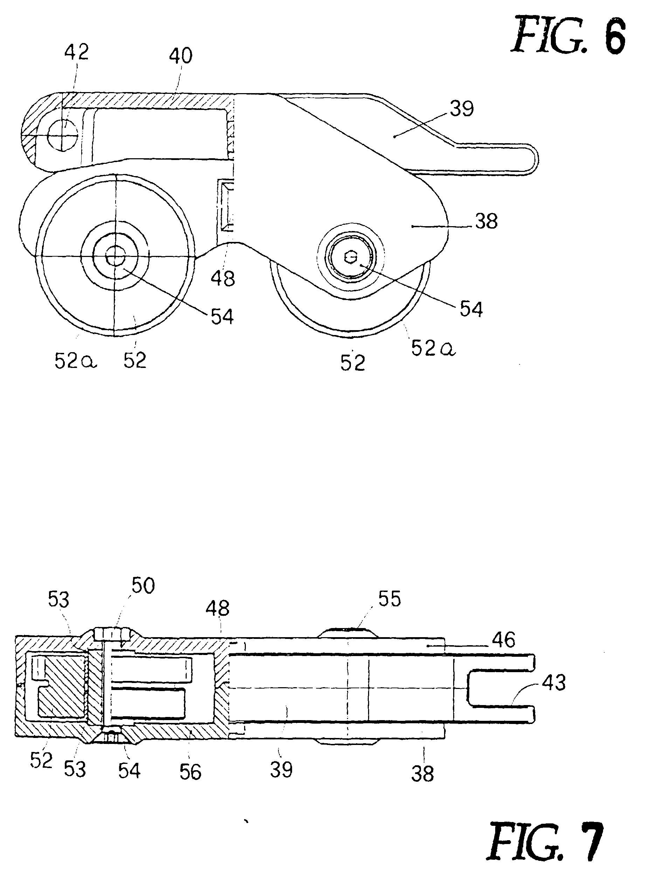

With reference specifically to Figures 4, 5 and 6, it will be noted that the pressure rollers 52 are mounted between the two halves 38 and 46 of the rocker arm on perforated pins 49, inside which screws 55 are engaged that have, for example, a flush head and are inserted in countersunk holes 54 provided in the front part 38, whereas at the opposite end of the head they pass through holes 51 in the rear part 46 of the rocker arm 38 and are then screwed into lock nuts 50. Two raised portions are provided on the internal surfaces of the two parts of the rocker arm: i.e., a male portion 56 on one part and a female portion 48 on the other, arranged to ensure correct centering of the two parts of the rocker arm.

Two self-lubricating half-bushings 53 are inserted between the pivots pins 49 and the pressure rollers 52 and arranged to protect the contact surfaces against wear. A respective screw 55, e.g. having a flush head inserted in countersunk holes 54 provided in the front part 38, engages with said bushes, whereas at the opposite end with respect to the head said screws pass through the holes 51 in the rear part 46 of the rocker arm 38 to be then screwed into lock nuts 50. Two raised portions are provided on the internal surfaces of the two halves of the rocker arm, i.e, a male portion 56 on one part and a female portion 48 on the other, both arranged to provide correct centering of said half parts.

Two self-lubricating half-bushings 53 are inserted between the pivot pins 49 and the pressure rollers 52 and arranged to protect the contact surfaces against wear.

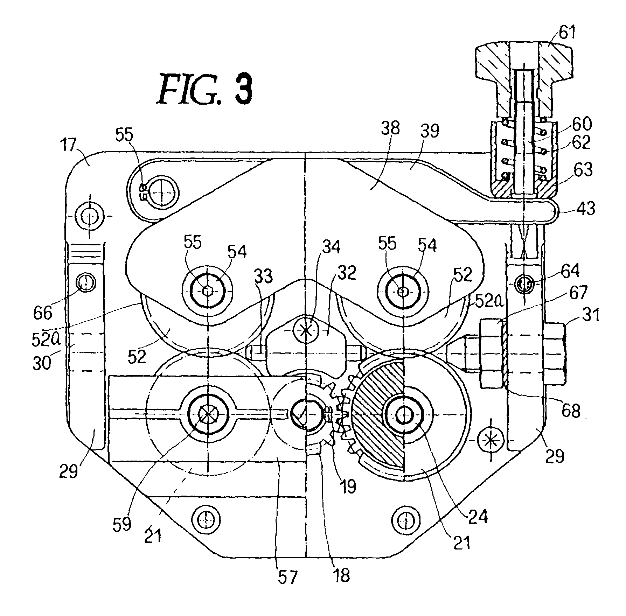

With reference to Figure 3, it will be noted that the entire operative connection system for the various reduction gears and the casing containing the same is fully separated from the pairs of rollers 21 and 52. Accordingly, if a specific lubricating system for the reduction gears is provided, this does not hinder proper operation of the pairs of rollers 21 and 52 and thus does not hinder pulling of the welding wire.

The whole unit can be made of electrically insulating material, so as to avoid sparking before the wire reaches the torch, thereby preventing it from being welded to parts inside said unit.

The wire pulling unit described above can achieve the intended aim and objects. In particular, it is capable of avoiding jamming of the wire inside it and constantly maintains its grip on the wire even if one of the back-up rollers is moved away from its feed roller, since owing to the rocker arm mounting the other back-up roller is correspondingly pressed against the wire. Moreover, it has a compact structure and all its moving parts are well-protected to prevent the operator from inadvertently placing his fingers between the rollers or the gears.

The materials and the dimensions may be various according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A wire pulling unit, particularly for continuous wire welding apparatuses, which includes a support casing, a pair of driving teed rollers arranged one after the other in the direction in which the wire to be pulled is unwound, and a pair of back-up or pressure rollers which are resiliently loaded against the feed rollers, characterized in that said pair of pressure rollers are mounted on a rocker arm element which is pivoted to a support at an intermediate position thereof between the pressure rollers, whereby, in use, should one pressure roller be lifted away from its respective feed roller, the other roller is pressed against its respective driving feed roller to ensure constant grip on the wire being pulled.

2. A unit according to claim 1, characterized in that said support for said rocker arm element comprises a lever having one end thereof pivoted to a casing and the other end thereof loaded so as to be moved towards the feed rollers, said lever being rigidly coupled to said rocker arm element in an intermediate position thereof.

3. A unit according to claim 2, characterized in that said lever has a fork-like end.

4. A unit according to claim 2 or 3, characterized in that said two pressure rollers engage with said feed rollers.

5. A unit according to any claim 2 to 4, characterized in that it comprises an articulated device pivoted to said casing to be movable from a working engagement position to a resting position.

6. A unit according to any preceding claim, characterized in that it comprises a casing to which support means are fixed which allow to act on the wire that is being pulled in both advancement directions.

7. A unit according to claim 6, characterized in that said casing comprises fork-like elements and an anchoring system for said articulated device.

8. A unit according to any preceding claim, characterized in that it comprises at least one bushing inside each feed roller.

9. A unit according to any preceding claim, characterized in that it comprises at least one bushing inside each pressure roller.

10. A unit according to claim 8 or 9, characterized in that a bushing inside the feed rollers and the pressure rollers are made of self-lubricating and electrically insulating material.

11. A unit according to any preceding claim, characterized in that the axial dimensions of said pinion are at least double than those required for motion transmission.

12. A unit according to any preceding claim, characterized in that it comprises a gearmotor with a motion reduction means made of electrically insulating material.

13. A unit according to any preceding claim, characterized in that it comprises centering elements inside the rocker-like element.
